Europäisches Patentamt

European Patent Office

Office européen des brevets

(19)

(11) Veröffentlichungsnummer : **0 130 292**
**B1**

(12) **EUROPÄISCHE PATENTSCHRIFT**

(45) Veröffentlichungstag der Patentschrift :
22.10.86

(21) Anmeldenummer : 84103990.2

(22) Anmeldetag : 10.04.84

(51) Int. Cl.⁴ : **H 02 K 11/00, H 02 K 15/12,
H 02 K 3/16**

(54) **Stillstandsheizung für elektrische Maschine.**

(30) Priorität : 04.05.83 DE 3316234

(43) Veröffentlichungstag der Anmeldung :
09.01.85 Patentblatt 85/02

(45) Bekanntmachung des Hinweises auf die Patenterteilung : 22.10.86 Patentblatt 86/43

(84) Benannte Vertragsstaaten :
AT BE CH DE FR GB IT LI NL SE

(56) Entgegenhaltungen :
DE-B- 2 315 191
DE-B- 2 635 687
DE-C-   447 624

(73) Patentinhaber : BROWN, BOVERI & CIE Aktiengesellschaft
Kallstadter Strasse 1
D-6800 Mannheim 31 (DE)

(72) Erfinder : Meiser, Karlheinz, Dr.
Breslauer Strasse 11
D-6688 Illingen (DE)
Erfinder : Keller, Fritz
Richard-Wagner-Strasse 92
D-6602 Dudweiler (DE)
Erfinder : Reiter, Hans
Breslauer Strasse 43
D-6600 Saarbrücken (DE)

(74) Vertreter : Kempe, Wolfgang, Dr. et al
c/o Brown, Boveri & Cie AG Postfach 351
D-6800 Mannheim 1 (DE)

## Beschreibung

Die Erfindung betrifft eine elektrische Drehfeldmaschine mit in Nuten angeordneter Ständerhauptwicklung.

Insbesondere bei geschlossenen elektrischen Maschinen kann durch Einbau einer Stillstandsheizung die Bildung von Schwitzwasser (Feuchtigkeit infolge Kondensation) bei Temperaturschwankungen vermieden werden. Es ist beispielsweise bekannt, die Ständerwicklung, oder einen Teil der Ständerwicklung, jeweils bei Stillstand der Maschine an eine Spannungsquelle anzuschließen und durch die ohmschen Verluste in der Ständerwicklung einer Abkühlung der Maschine entgegenzuwirken und die Bildung von Feuchtigkeit infolge Kondensation zu verhindern. Eine derartige Stillstandsheizung ist teuer, da ein auf die erforderliche Spannung und Heizleistung dimensionierter Transformator erforderlich ist. Werden an die elektrische Maschine die Anforderungen des Explosionsschutzes gestellt, so müssen auch bei der Auswahl und Aufstellung der Transformatoren die Richtlinien des Explosionsschutzes beachtet werden.

Ferner ist es bei Niederspannungsmotoren üblich, Heizbänder auf die Wickelköpfe zu bandagieren. Die Speisung erfolgt über Hilfsklemmen meistens mit 220 V Wechselspannung. Das Umwickeln der Wickelköpfe mit Widerstandsdraht oder Heizbändern ist jedoch nur bei ausreichendem Abstand zwischen Wickelkopf und Gehäuse möglich. Diese Lösung ist bei vielen elektrischen Maschinen jedoch nicht anwendbar, da über den Wickelköpfen nicht ausreichend Raum zur Verfügung steht, oder dieser Raum fertigungsbedingt nicht zugänglich ist. Ferner sind Heizbänder wegen ihrer zu dünnen Heizdrähte bzw. ihrer Oberflächentemperaturen bei explosionsgeschützten Maschinen nicht zugelassen.

Im Mittel- und Großmaschinenbereich verwendet man als Stillstandsheizung Heizstäbe, die ins Gehäuse der Maschine geschraubt werden. Heizstäbe sind jedoch teuer und bei Normmotoren aus Platzgründen nicht verwendbar.

An die Stillstandsheizungen für explosionsgeschützte Motoren der Zündschutzart « erhöhte Sicherheit » werden erhöhte Sicherheitsanforderungen gestellt, die durch die beschriebenen Maßnahmen, insbesondere bei Elektro-Normmotoren, nicht einhaltbar sind.

Aufgabe der Erfindung ist es, für elektrische Maschinen eine Stillstandsheizung zu schaffen, die durch einfache Mittel und kostengünstig in Elektro-Normmotoren montierbar ist, und die den Anforderungen an explosionsgeschützte Maschinen insbesondere in Zündschutzart « erhöhte Sicherheit » genügt.

Gemäß der Erfindung wird diese Aufgabe bei einer elektrischen Drehfeldmaschine mit in Nuten angeordneter Ständerhauptwicklung dadurch gelöst, daß wenigstens in einigen der Nuten neben der Ständerhauptwicklung eine separate Wicklung angeordnet ist, die als Heizwicklung ausgebildet ist.

Vorzugsweise wird die Heizwicklung als Einschichtwicklung mit kurzem Wicklungsschritt ausgebildet. Kurzer Wickelschritt bedeutet, daß die beiden Nuten, denen die hingehenden und rückkehrenden Leiter einer Spule angehören, nahe beieinander liegen. Hierdurch ist es möglich, die Wickelkopfausladung der Heizwicklung klein zu halten und eine kreuzungsfreie Verlegung der einzelnen Spulen der Heizwicklung im Bereich des Wickelkopfes zu ermöglichen. Hierdurch können zu hohe Temperaturen in den Wickelköpfen der Heizwicklung, wo die Wärmeabführung schlechter ist als in den Nuten, und Heißpunkte an Kreuzungspunkten von Leiter der Heizwicklung vermieden werden.

Die Anzahl und Schaltung der Spulen wird zweckmäßigerweise so gewählt, daß die gegenseitige Induzierung von Spannungen zwischen Heizwicklung und Hauptwicklung möglichst gering ist. Hierbei ist es häufig von besonderem Vorteil, die Heizwicklung als Einphasenwicklung auszulegen, die aus mehreren in Reihe geschalteten Einzelspulen besteht. Hierbei können Verbindungspunkte zwischen den einzelnen Spulen (Lötstellen) vermieden werden.

Für eine einfache Montage der Heizwicklung ist es vorteilhaft, diese am Luftspalt, d. h. über der Ständerwicklung im Bereich der Nutöffnung, anzuordnen. Die Heizwicklung wird hierbei erst nach Einlegen der Ständerhauptwicklung in die Nuten eingebracht.

In weiterer Ausgestaltung der Erfindung ist die Heizwicklung in ihrem Wickelkopfbereich zwischen zwei Isolierstreifen angeordnet, wobei ein Isolierstreifen zwischen Heizwicklung und Hauptwicklung liegt und der zweite Isolierstreifen die Heizwicklung abdeckt. Der erste Isolierstreifen dient der Isolierung zwischen Heizwicklung und Ständerhauptwicklung, und durch den zweiten Isolierstreifen wird zur Fixierung der Spulendrähte die Heizwicklung luftspaltseitig abgedeckt. Zur Isolierung von Ständerhauptwicklung und Heizwicklung im Bereich der Nut wird zweckmäßigerweise eine Zwischenlage aus Isoliermaterial zwischen den Wicklungen angeordnet. Das abschließende Imprägnieren mit Tränkmittel bewirkt eine Fixierung der Heizwicklung und einen guten Wärmeübergang.

Vorzugsweise sind die Wickelköpfe der Heizwicklung an die Ständerhauptwicklung bandagiert.

Die Heizwicklung besteht vorzugsweise aus lackisoliertem Runddraht aus Widerstandswerkstoff, in der Regel einer Widerstandslegierung.

Anhand der Zeichnung sollen die Erfindung sowie weitere vorteilhafte Ausgestaltungen und Weiterbildungen näher erläutert werden.

Es zeigt :

Figur 1 einen Sektor des Querschnittes einer Drehstrommaschine,

Figur 2 den Querschnitt einer Ständernut,

Figur 3 ein Wickelschema der Heizwicklung für den Ständer einer Drehstrommaschine,

Figur 4 einen Ausschnitt aus dem Axialschnitt einer Drehstrommaschine, der den Wickelkopfbereich darstellt.

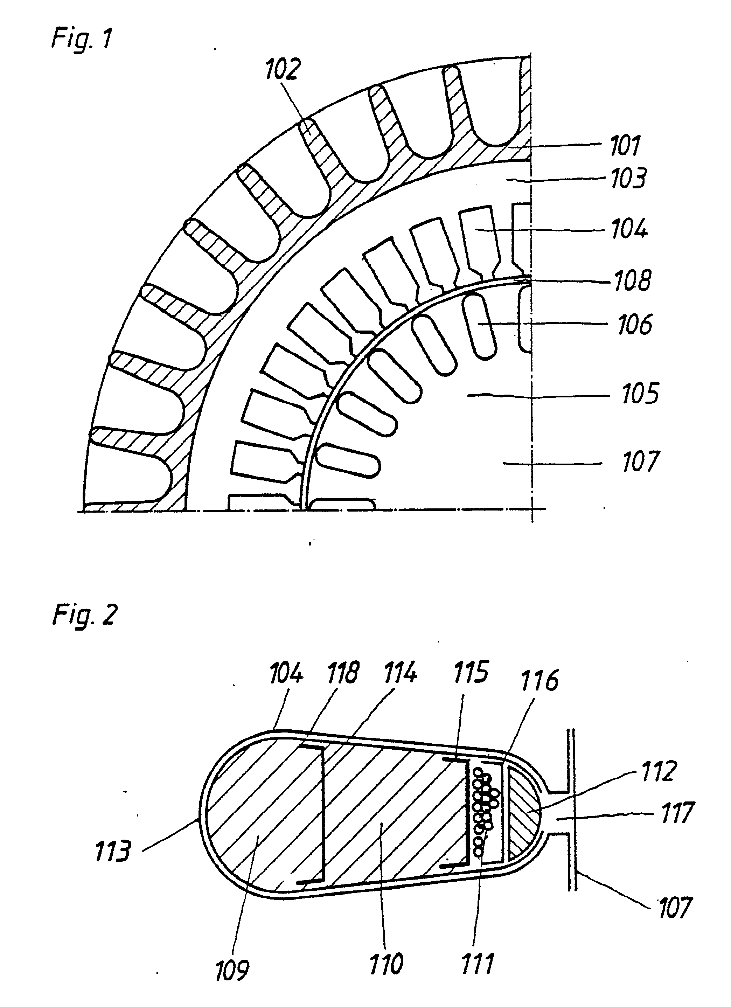

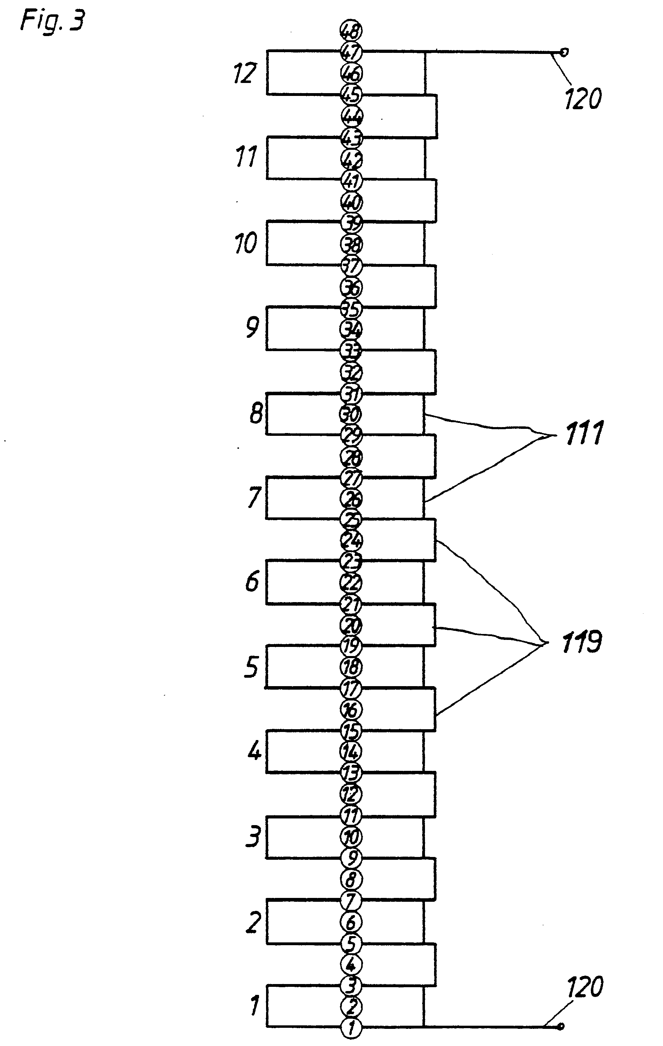

Den Fig. 1, 2, 3 und 4 sind Einzelheiten einer 4-poligen oberflächengekühlten Drehstrommaschine mit einer Ständernutzahl von 48 (gemäß Fig. 3) entnehmbar, die explosionsgeschützt in Zündschutzart « erhöhte Sicherheit » ausgeführt sein kann. Die Fig. 1 zeigt einen Sektor des Querschnittes durch die Drehstrommaschine mit dem Motorgehäuse 101 mit angeformten Kühlrippen 102, dem Ständerblechpaket 103, welches Ständernuten 104 mit eingelegter Ständerhauptwicklung enthält, und dem Läufer 105, welcher eingegossene bzw. eingeschobene Läuferstäbe 106 enthält, die beidseitig des Läuferblechpaketes 107 durch nicht dargestellte Kurzschlußringe miteinander elektrisch verbunden sind. Zwischen dem Läuferblechpaket 107 und dem Ständerblechpaket 103 befindet sich ein Luftspalt 108.

In Fig. 2 ist in vergrößerter Darstellung der Querschnitt einer Ständernut 104 gemäß Fig. 1 dargestellt. In die Ständernut 104 ist eine Ständerhauptwicklung 109, 110, eine Heizwicklung 111 und ein Nutkeil 112 eingelegt. Die Ständerhauptwicklung 109, 110 ist als Zweischichtwicklung ausgebildet. Im Nutgrund 113 ist die Unterlage der Ständerhauptwicklung 109 und darüber die Oberlage der Ständerhauptwicklung 110 angeordnet. Unterlage 109 und Oberlage 110 sind durch eine Zwischenlage 114 gegeneinander isoliert. Durch eine weitere Zwischenlage 115 ist die Oberlage der Ständerhauptwicklung 110 gegen die Heizwicklung 111 isoliert. Die Ständernut 104 ist mit einem Deckschieber 116 und dem Nutkeil 112 verschlossen. Die gesamte Ständernut 104 ist durch eine Nutisolation 118 ausgekleidet.

Die Heizwicklung 111 ist eine Einphasenwicklung und ist aus zwölf Einzelspulen in Reihe geschaltet. Sie wird wie eine getrennte Wicklung behandelt. Sie liegt am Luftspalt, d. h. im Bereich der Nutöffnung 117, was das Einlegen der Heizwicklung 111 erleichtert. Beim Einlegen der Heizwicklung 111 kann wie folgt verfahren werden : Nachdem die Hauptwicklung 109, 110 komplett geschaltet aber noch nicht getränkt ist, werden bei den entsprechenden Ständernuten 104 (in die eine Heizwicklung 111 eingelegt werden soll) die Nutkeile 112 und die Deckschieber 116 entfernt. Anschließend werden in diese Ständernuten 104 am Luftspalt Zwischenlagen 115 eingeführt, um die Oberlage der Hauptwicklung 110 und die Heizwicklung 111 gegeneinander zu isolieren. Nach dem Einlegen der Heizwicklung 111 werden die entsprechenden Ständenuten 104 wieder mit den Deckschiebern 116 und den Nutkeilen 112 verschlossen.

Die Figur 3 zeigt eine Abwicklung der Heizwicklung vom Luftspalt aus gesehen. Die Heizwicklung 111 besteht aus zwölf Spulen (Ziffern 1 bis 12), die durch Übergangsleiter 119 miteinander verbunden und in Reihe geschaltet sind. Die beiden Anschlußleitungen 120 der Heizwicklung sind an nicht dargestellte Hilfsklemmen im Klemmenkasten der Maschine angeschlossen. Der Wickelschritt der Spulen beträgt 2. Jede Spule besteht aus mehreren in Reihe geschalteten Leitern aus einem lackisolierten Runddraht, welcher aus einer Widerstandslegierung (z. B. CuNi 44) besteht. Der Durchmesser und die Isolierung des Runddrahtes entsprechen den Anforderungen für explosionsgeschützte Maschinen der Zündschutzart « erhöhte Sicherheit ».

Da eine Spule nur aus wenigen in Reihe liegenden Leitern besteht und ein Leiter wiederum aus nur einem Draht besteht, hat die Heizwicklung 111 nur einen sehr geringen Platzbedarf (ca. 1 % der Nutfläche) und läßt sich folglich mühelos in jede Maschine einbauen.

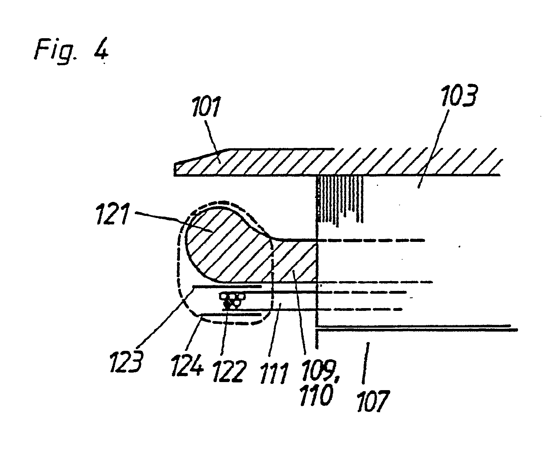

Die Ausführung der Heizwicklung gemäß Fig. 3 erlaubt außer einer gleichmäßigen Verteilung der Heizleistung und dem daraus resultierenden gleichmäßigen Temperaturfeld innerhalb der Maschine auch eine besonders einfache Gestaltung der Isolierung gegenüber der Hauptwicklung im Wickelkopfbereich, welcher in Fig. 4 dargestellt ist. Es ist das Motorgehäuse 101 und das Ständerblechpaket 103, aus dem die Ständerhauptwicklung 109, 110 heraustritt und den Wickelkopf 121 bildet, erkennbar. Neben der Ständerhauptwicklung 109, 110 tritt luftspaltseitig die Heizwicklung 111 aus dem Ständerblechpaket 103 aus. Durch die günstige Dimensionierung der Heizwicklung 111 gemäß Fig. 3 kann die Ausladung des Wickelkopfes 122 her Heizwicklung 111 gering gehalten werden, wodurch der Haupteil der Heizleistung im Nutbereich anfällt, wo eine gute Weiterleitung der Wärme an die Hauptwicklung 109, 110 und das Ständerblechpaket 103 erfolgt. Ferner kann die Verlegung der Spulen im Wickelkopfbereich weitgehend durch die günstige Heizwicklungsauslegung kreuzungsfrei erfolgen, so daß Heißpunkte im Wickelkopfbereich vermieden werden.

Im Wickelkopfbereich wird die Heizwicklung 111 durch Isolierstreifen 123 (Phasentrenner) von der Hauptwicklung 109, 110 isoliert. Ein weiterer Isolierstreifen 124 deckt luftspaltseitig die Heizwicklung 111 ab.

Der Wickelkopf 122 der Heizwicklung 111 wird an den Wickelkopf 121 der Hauptwicklung 109, 110 bandagiert (gestrichelte Linie). Der Wickelkopfbereich der Heizwicklung 111, der zwischen den Isolierstreifen 123 und 124 liegt, läuft beim Tränken der Wicklungen mit Tränkharz zu, so daß die Heizwicklung 111 im Wickelkopfbereich fest eingebettet ist.

Das Isoliermaterial kann aus Verbundspan bzw. Isolierfolie bestehen.

Bei der Dimensionierung von Heizwicklungen 111 wird die Anzahl und Schaltung der Spulen zweckmäßigerweise so gewählt, daß die gegenseitige Induzierung von Spannung zwischen Heizwicklung 111 und Hauptwicklung 109, 110 möglichst gering ist. Die thermische Belastung der Heizwicklung 111 wird vorzugsweise derart begrenzt, daß bei Stillstand der Maschine diese lediglich soweit erwärmt wird, daß Schwitzwasserbildung vermieden wird. Beispielsweise muß für den stationären Zustand die aufzuwendende Heizleistung den Wärmeverlusten durch natürliche Konvektion entsprechen. Durch die Erfindung lassen sich diese Anforderungen besonders günstig für explosionsgeschützte Maschine der Zündschutzart « erhöhte Sicherheit », bei der besondere Sicherheitskriterien erfüllt werden müssen, realisieren.

**Patentansprüche**

1. Elektrische Drehfeldmaschine mit in Nuten (104) angeordneter Ständerhauptwicklung (109, 110), dadurch gekennzeichnet, daß wenigstens in einigen der Nuten (104) neben der Ständerhauptwicklung (109, 110) eine separate Wicklung angeordnet ist, die als Heizwicklung (111) ausgebildet ist.

2. Drehfeldmaschine nach Anspruch 1, dadurch gekennzeichnet, daß die Heizwicklung (111) als Einschichtwicklung mit kurzem Wickelschritt ausgebildet ist.

3. Drehfeldmaschine nach einem der Ansprüche 1 oder 2, dadurch gekennzeichnet, daß die Heizwicklung (111) aus mehreren in Reihe geschalteten Spulen (1 bis 12) besteht.

4. Drehfeldmaschine nach einem der Ansprüche 1 bis 3, dadurch gekennzeichnet, daß die Heizwicklung (111) über der Ständerhauptwicklung (109, 110) im Bereich der Nutöffnung (117) angeordnet ist.

5. Drehfeldmaschine nach einem der Ansprüche 1 bis 4, dadurch gekennzeichnet, daß im Wickelkopfbereich die Heizwicklung (111) zwischen zwei Isolierstreifen (123, 124) angeordnet ist, wobei ein Isolierstreifen (123) zwischen Heizwicklung (111) und Hauptwicklung (110) liegt und der zweite Isolierstreifen (124) die Heizwicklung (111) luftspaltseitig abdeckt.

6. Drehfeldmaschine nach einem der Ansprüche 1 bis 5, dadurch gekennzeichnet, daß die Wickelköpfe (122) der Heizwicklung (111) an die Wickelköpfe (121) der Ständerhauptwicklung (109, 110) bandagiert sind.

7. Elektrische Maschine nach einem der Ansprüche 1 bis 6, dadurch gekennzeichnet, daß die Heizwicklung (111) aus lackisoliertem Runddraht aus Widerstandswerkstoff besteht.

8. Elektrische Maschine nach einem der Ansprüche 1 bis 7, dadurch gekennzeichnet, daß zwischen Ständerhauptwicklung (109, 110) und Heizwicklung (111) eine Zwischenlage (115) aus Isoliermaterial angeordnet ist.

**Claims**

1. Electrical induction machine with a main stator winding (109, 110) arranged in slots (104), characterised in that a separate winding designed as a heating winding (111) is arranged next to the main stator winding (109, 110) in some of the slots (104).

2. Induction machine according to Claim 1, characterised in that the heating winding (111) is designed as a single-layer winding with a short winding pitch.

3. Induction machine according to one of Claims 1 or 2, characterised in that the heating winding (111) consists of several coils (1 to 12) connected in series.

4. Induction machine according to one of Claims 1 to 3, characterised in that the heating winding (111) is arranged above the main stator winding (109, 110) in the region of the slot orifice (117).

5. Induction machine according to one of Claims 1 to 4, characterised in that, in the region of the end turns, the heating winding (111) is arranged between two insulating strips (123, 124), one insulating strip (123) lying between the heating winding (111) and the main winding (110) and the second insulating strip (124) covering the heating winding (111) on the same side as the air gap.

6. Induction machine according to one of Claims 1 to 5, characterised in that the end turns (122) of the heating winding (111) are tied to the end turns (121) of the main stator winding (109, 110).

7. Electrical machine according to one of Claims 1 to 6, characterised in that the heating winding consists of enamel-insulated round wire made of resistance material.

8. Electrical machine according to one of Claims 1 to 7, characterised in that an intermediate layer of insulating material is arranged between the main stator winding (109, 110) and the heating winding (111).

**Revendications**

1. Machine électrique à champ tournant, avec enroulement statorique principal (109, 110) agencé dans des encoches (104), caractérisée en ce qu'un enroulement séparé aménagé en tant qu'enroulement chauffant (111) est agencé dans au moins quelques encoches (104), en plus de l'enroulement statorique principal (109, 110).

2. Machine à champ tournant selon la revendication 1, caractérisée en ce que l'enroulement chauffant (111) est réalisé en tant qu'enroulement à une seule couche avec pas de bobinage court.

3. Machine à champ tournant selon la revendication 1 ou 2, caractérisée en ce que l'enroulement chauffant (111) est constitué de plusieurs bobines (1 à 12) branchées en série.

4. Machine à champ tournant selon l'une des revendications 1 à 3, caractérisée en ce que l'enroulement chauffant (111) est agencé par-dessus l'enroulement statorique principal (109, 110), dans la région de l'ouverture (117) des encoches.

5. Machine à champ tournant selon l'une des revendications 1 à 4, caractérisée en ce que, dans la région des têtes de bobines, l'enroulement chauffant (111) est agencé entre deux bandes isolantes (123, 124), dont l'une (123) se trouve entre l'enroulement chauffant (111) et l'enroulement principal (110), et l'autre (124) recouvre l'enroulement chauffant (111) du côté de l'entrefer.

6. Machine à champ tournant selon l'une des revendications 1 à 5, caractérisée en ce que les têtes de bobines (122) de l'enroulement chauffant (111) sont appliquées par des bandages contre les têtes de bobines (121) de l'enroulement statorique principal (109, 110).

7. Machine électrique selon l'une des revendications 1 à 6, caractérisée en ce que l'enroulement chauffant (111) est en fil rond en matériau résistant, isolé par vernis.

8. Machine électrique selon l'une des revendications 1 à 7, caractérisée en ce qu'une couche intermédiaire (115) de matière isolante est agencée entre l'enroulement statorique principal (109, 110) et l'enroulement chauffant (111).

*Fig. 1*

*Fig. 2*

Fig. 3

0 130 292

Fig. 4